# EUROPEAN PATENT APPLICATION

(11) **EP 1 669 246 A2**
(43) Date of publication of application: **14.06.2006**
(21) Application number: 05257420.9
(22) Date of filing: 02.12.2005
(51) Int. Cl.: B60R 13/04, B60J 10/04

(54) **Sealing, trimming and finishing strips and vehicle doors incorporating such strips**

(30) Priority: 09.12.2004 GB 0427019
(71) Applicant: GDX North America Inc., Dover Delaware 19901 (US)
(72) Inventor: Grüter, Achim, 41749 Viersen (DE); Sans, Philippe, 28600 Luisant (FR)
(74) Representative: Foster, Mark Charles

(57) **Abstract**

A sealing assembly particularly suitable for the C-pillar of a vehicle door is disclosed. The sealing assembly comprises a glass guiding strip 20, waist strip 30, roof strip 40 and C-pillar strip 50. The C-pillar strip 50 follows the contour of the door C-pillar and provides a continuous moulded surface that is visible from the exterior of the vehicle door. The C-pillar strip 50 is moulded onto the waist strip 30, glass run strip 20 and roof strip 40. Flocked surfaces that contact the window glass are all formed by an extrusion process.

## Description

This invention relates to sealing, trimming and finishing strips, vehicle doors incorporating such strips and to a method of forming such a sealing, trimming and finishing strip.

According to a first aspect of the present invention, there is provided a sealing arrangement for sealing and guiding a closure member for closing an aperture, the sealing arrangement including a first section for sealing against a surface of the closure member as the closure member moves relative thereto and a second section having a channel for receiving an edge of the closure member, wherein a lip extends along the first section and the second section.

According to a second aspect of the present invention, there is provided a method of forming a sealing arrangement for sealing and guiding a closure member for closing an aperture, the method including forming a first section for sealing against a surface of the closure member as the closure member moves relative thereto, and forming a second section having a channel for receiving an edge of the closure member, wherein the first and second sections are formed with a lip which extends along the first section and the second section.

According to a third aspect of the present invention, there is provided the sealing arrangement for sealing and guiding a closure member for closing an aperture, the sealing arrangement including a first section for sealing against a surface of the closure member as the closure member moves relative thereto, a second section having a channel for receiving an edge of the closure member, and a moulded part extending between the first section and the second section for connecting them, the arrangement being such that, when the sealing arrangement is in use, the moulded part is visually prominent.

According to a fourth aspect of the present invention, there is provided a method of forming a sealing arrangement for sealing and guiding a closure member for closing an aperture, the method including forming a first section for sealing against a surface of the closure member as the closure member moves relative thereto in use, forming a second section having a channel for receiving an edge of the closure member, and forming a moulded part extending between the first section and the second section for connecting them, the arrangement being such that, when the sealing arrangement is mounted to the frame, the moulded part is visually prominent.

Sealing, trimming and finishing strips embodying the invention, vehicle doors according to the invention and incorporating such strips, and a method of forming such strips will now be described by way of example only with reference to the accompanying drawings, in which:
Figure 1 shows a side elevational view of the rear passenger door of a motor vehicle;
Figure 2 shows a side elevational view of a sealing assembly in accordance with the present invention;
Figure 3 shows a side elevation of a mounting assembly in accordance with the present invention;
Figure 4 shows in perspective a front view of the mounting assembly;
Figure 5 shows a detailed cut away perspective view along line A-A of Figure 4 showing components mounted in the mounting assembly;
Figure 6 shows a detailed cut away perspective view along line B-B of Figure 4 showing the components mounted to the mounting assembly at this location;
Figure 7 shows an overhead partially cut away perspective view of the mounting assembly;
Figure 8 shows a partially cut away perspective view of the sealing assembly where the C-pillar meets the roofline;
Figure 9 is a cross-sectional view taken along the line C-C of Figure 8;
Figure 10 is a cross-sectional view taken along the line D-D of Figure 8;
Figure 11 is a detailed cut-away perspective view of the sealing assembly where the C-pillar meets the waist line;
Figure 12 shows an enlarged view of the sealing assembly;
Figure 13A is a cross-sectional view along the line E-E of Figure 12;
Figure 13B is a cross-sectional view along the line F-F of Figure 12;
Figure 13C is a cross-sectional view along line G-G of Figure 12;
Figure 14 is a cut-away perspective view of the sealing assembly where the C-pillar meets the waist line;
Figure 15 is a perspective view of the rear of the part cut-away sealing assembly where the roof line meets the C-pillar;
Figure 16 is a cut-away perspective view of the sealing assembly along the line H-H of Figure 15;
Figure 17 is a perspective inner view of the complete sealing assembly mounted to the mounting assembly; and
Figure 18 is a partly cut away perspective view of the C-pillar portion of the vehicle door.

In the drawings like elements are generally designed with the same reference numerals.

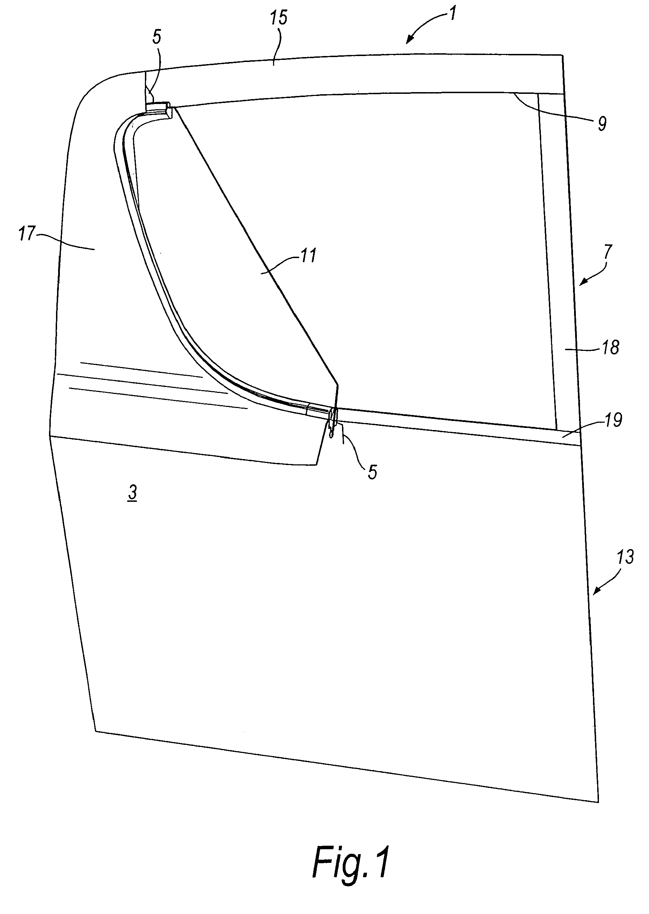

Figure 1 shows a motor vehicle rear passenger door 1 comprising an outer panel 3 visible from the exterior of the vehicle and an inner panel 5, which is spot-welded or otherwise attached to the inner panel 3. The door 1 includes an upper part 7 defining a window aperture 9. Window pane 11 is mounted in the door for sliding movement in order to allow the window aperture 9 to be opened or closed by the window glass 11. When the window aperture 9 is opened the window glass 11 slides into the lower part 13 of the door 1.

The door 1 includes a roof line section 15 which generally follows the contour of the roof of the vehicle (not shown), a C-pillar section 17 between the window glass 11 and the part of the outer panel 3 which meets the part of the main body of the vehicle which houses the rear windscreen (not shown), and a waist line section 19 which extends between the upper part 7 and the lower part 13 of the door 1.

A sealing, trimming and guiding assembly to be described in more detail below extends around the window aperture 9 in order to provide a noise and weather resistant seal against the window glass 11, and also performs a glass guiding function to guide movement of the window glass 11 as it slides within the lower part 13 of the door 1. The sealing, trimming and guiding assembly comprises a plurality of parts, some or all of which will be joined together before the assembly is fitted to the door 1.

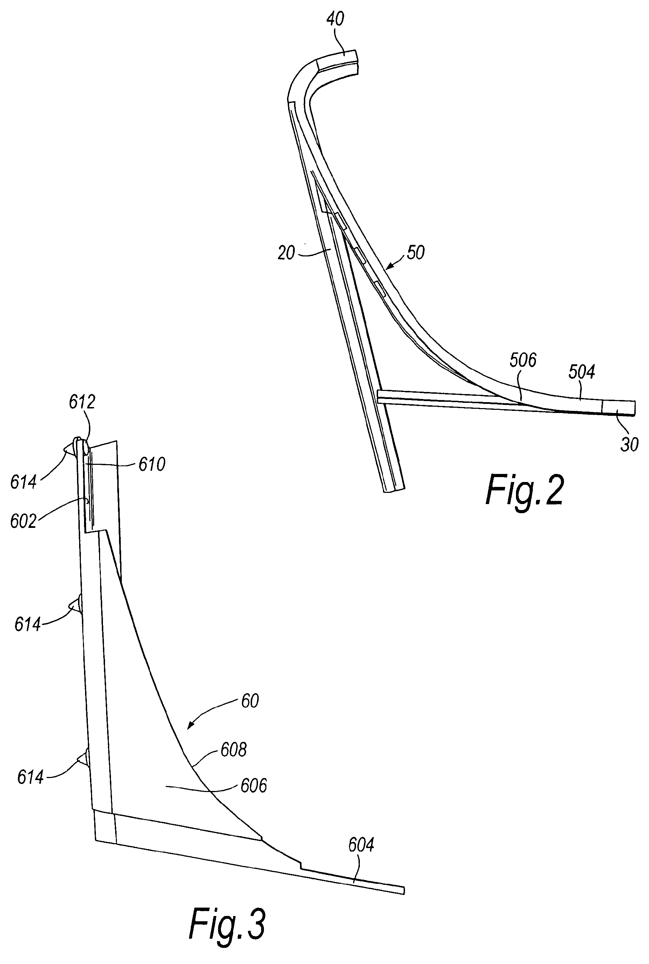

Figure 2 shows part of the sealing assembly for the door 1 of Figure 1. The sealing assembly comprises a glass guiding strip 20 extending downwardly from the roof line 15 behind the upper part 7 of the door panel 3 forming the C-pillar 17. The rear edge of the window glass 11 slides along the glass guiding strip 20 as it is raised and lowered within the door 1. The glass guiding strip 20 extends beyond the waist line 19 and into the lower part 13 of the door 1.

The sealing assembly further comprises a waist strip 30 which extends along the waist line 19 of the door 1 from the point at which it meets the glass guiding strip to the point at which it meets the B-pillar 18.

The sealing assembly further comprises a roof strip 40 which extends along the roof line 15 from the top of the C-pillar 17 (where it meets the glass guiding strip 20) to the B-pillar 18. The form of the roof strip is generally the same along its entire length (only a portion of which is shown in Figure 2). Although not shown in Figure 2 a further glass guiding strip extends along the B-pillar 18 for guiding the window glass 11 at the opposite side to the glass guiding strip 20. The roof strip 40 and the waist strip 30 meet the B-pillar glass guiding strip and may be coupled thereto by a bonding agent or by moulding, for example.

The sealing assembly of Figure 2 further includes a C-pillar strip 50 extending along the C-pillar 17 . The C-pillar strip 50 joins the glass guiding strip 20 and the roof strip 40 in the region where the C-pillar 17 meets the roof line 15, at its upper end. At its lower end, the C-pillar strip 50 meets the waist seal 30.

The form of the glass guiding strip 20, waist strip 30, roof strip 40 and C-pillar strip 50 and the manner of connection of these strips will be described in more detail below.

The sealing assembly is mounted to a mounting assembly 60 shown in Figure 3. The mounting assembly is formed of plastics, such as rigid plastics.

The mounting assembly includes a glass guiding strip 20 receiving channel 602 and a waist strip 30 receiving channel 604, which meet at approximately right angles. Extending between the channel 602 and the channel 604 is a wall 606 which approximately follows the contour of the C-pillar 17 of the door 1. The distal edge 608 of the wall 606 forms a support wall for supporting the C-pillar strip 50. The channel 602, channel 604 and wall 608 may be formed from respective moulded plastics parts or from a single moulded part. If formed from multiple parts, these parts will be joined together by any suitable means, such as a bonding agent or moulding. The base 610 of the glass guiding strip 20 receiving channel 602 has a plurality of generally circular apertures 612 formed therein at regularly spaced apart locations for receiving mounting clips 614. The mounting clips 614 (to be described in more detail below) are used for mounting the mounting assembly 60 to the door 1. The clips 614 pass through appropriately located apertures in the inner door panel 5 in the C-pillar 17 region in order to fix the mounting assembly 60 to the door 1.

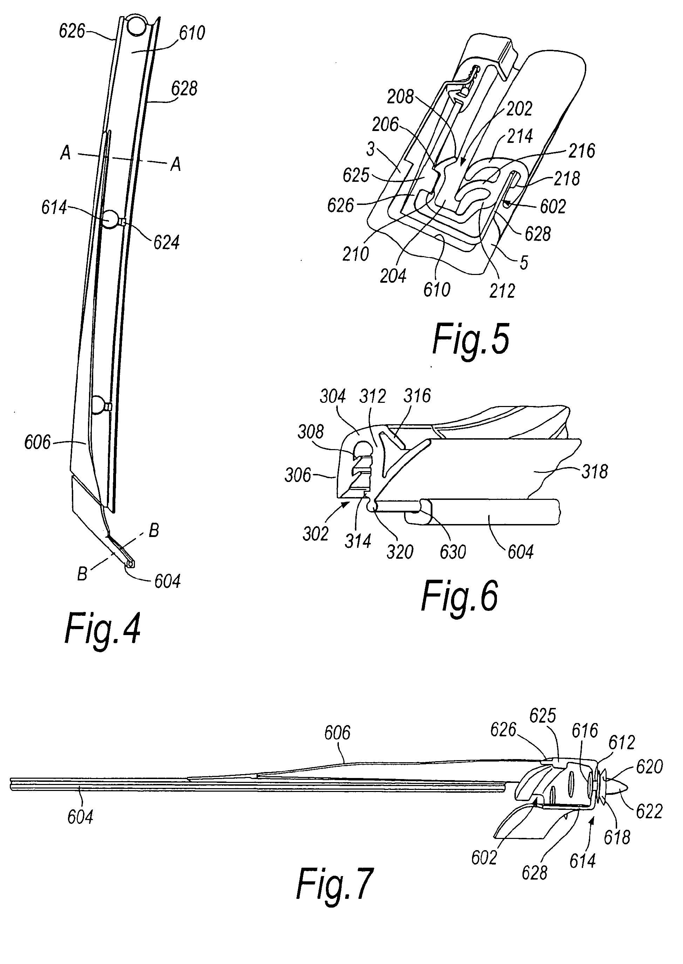

As shown in more detail in Figures 4,5 and 7, the glass guiding strip 20 receiving channel 602 is generally U-shaped. As indicated above, the glass guiding strip 20 receiving channel 602 is coupled to the inner door panel 5 (as shown in Figure 5). A the upper region of the C-pillar 17 (at the position indicated by the line A-A of Figure 4) the inner panel 5 and the outer panel 3 of the door 1 extend for a time generally in alignment with one another, and at this region the outer panel 3 will extend along the opposite side of the channel 602 to the inner panel 5.

As can be seen best in Figure 7, the mounting clip 614 terminates at its inner end with a disc-shaped plate 616 which lies against the base 610 of the channel 602. A narrow stem portion 618 of circular cross-section extends through the aperture 612 formed in the base 610 of the channel 602. A further disc-shaped plate 618 lies against the opposite side of the base 610 to the first-mentioned disc-shaped plate 616. The second disc-shaped plate 618 includes a V-shaped groove. Extending from the second disc-shaped plate 618 is a tapering tip portion 622.

The first and second plate shaped discs 616 and 618 serve to securely locate the clip 614 to the base 610 of the channel 602. The clip 614 may be mounted to the channel by resiliently deforming disc-shaped plate 616 and/or 618, or additionally or alternatively a rectangular extension 624 (Figure 4) to the circular aperture 612 may be formed in order to allow the plate shaped disc 616 to be inserted into the aperture 612,624 by aligning the disc-shaped plate 616 with the rectangular extension 624 of the aperture 612 and inserting the disc-shaped plate 616 through the aperture and then rotating the clip 614 through approximately 90° so that it has the configuration shown in the drawings. During this process some resilient deformation of the disc-shaped plate 618 and/or 616 occurs, and this resilience of the disc-shaped plates serves to securely locate the clip 614 in the position shown in the Figures. The mounting assembly 60, with the clip 614 coupled thereto, is then presented to the inner panel 5 of the door 1 and the tip 622 of the clip 614 are aligned with corresponding apertures formed in the inner panel 5. The tips 622 of the clip 614 are pushed into the apertures in the inner panel 5 with sufficient force to cause resilient deformation of the second disc-shaped plate 618 so that the walls of the aperture in the inner panel 5 are accommodated within the V-shaped recess 620 in order to securely clamp the clip 614 (and therefore also the mounting part 60 coupled thereto) to the inner panel 5 of the door 1.

Typically, the mounting clip 614 will be mounted to the base 610 of the channel 602. The sealing assembly will then be mounted to the mounting assembly 60, whereafter the mounting assembly (with the sealing assembly connected thereto) will be coupled to the inner panel 5 of the door 1 using the clips 614. However, it should be understood that this order of assembly is not essential.

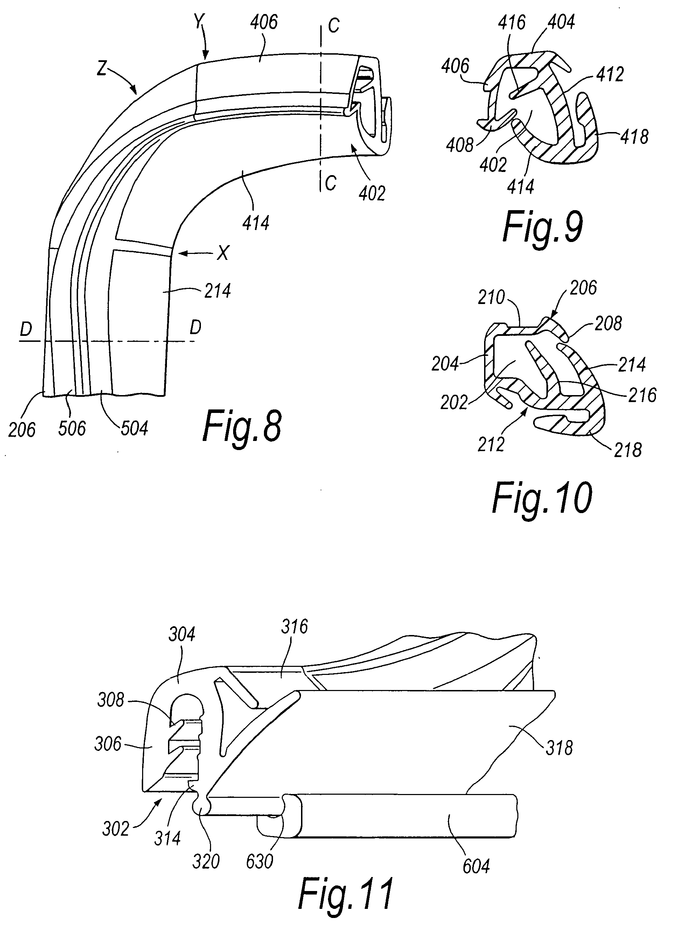

The form of the glass-guiding strip 20 will now be described in more detail, with particular reference to Figures 5,8 and 10. Figure 5 shows a cut-away perspective view of the glass guiding strip 20 mounted within channel 602. Figure 8 shows a perspective view at the region where the glass guiding strip 20 meets the roof strip 40 and the C-pillar strip 50. Figure 10 is a cross section taken along the line D-D of Figure 8 but particularly showing the glass guiding strip 20. The glass guiding strip 20 comprises a generally U-shaped glass receiving channel 202 for receiving gliding window glass 11. The channel 202 is defined by a base portion 204 which extends generally parallel to the base 610 of the channel 602 when the glass guiding strip 20 is mounted to the mounting assembly 60. Integrally extending from the base 204 is an outer wall 206. At the distal end of the outer wall is integrally formed an outer sealing lip 208 for sealing against the exterior surface of the window glass 11. The surface of the lip 208 that contacts the window glass 11 is preferably flocked.

The outer wall 206 includes a generally rectangular recess 210 into which a correspondingly shaped rectangular (in cross-section) protrusion 625 from the outer wall 626 of the channel 602 is accommodated in order to assist in locating the glass guiding strip 20 with respect to the channel 602.

Integrally extending from the base 204 at the opposite side to the outer wall 206 is an inner wall 212 of the glass guiding strip 20. The distal end of the inner wall 212 forms a sealing lip 214 for sealing against the interior side of the window glass 11. Preferably, the surface of the lip 214 that contacts the window glass 11 is flocked. A further lip 216 of similar configuration to lip 214 integrally extends from the inner wall 212 approximately mid-way therealong. The lip 216 improves the effectiveness of the seal to improve noise insulation and resistance to moisture ingress. At the distal end of the inner wall 212 a clamping lip 218 extends initially away from the mouth of the channel 202 and then downwardly generally parallel to the inner wall 212. The clamping lip 218 extends over the inner wall 628 of the channel 602 (and also possibly part of the inner panel 5 of the door 1) in order to assist in locating the glass guiding strip 20 with respect to the channel 602. The various elements of the glass guiding strip 20 described above are preferably integrally formed from TPE or EPDM by an extrusion process.

The form of the waist strip 30 will now be described with particular reference to Figures 4,6,7 and 11 of the drawings. The waist strip 30 comprises a channel 302 for receiving the edge of the outer panel 3 of the door 1 along the waist line 19 thereof. The channel 302 includes a base 304 from which integrally extends an outer wall 306. Integrally extending from the base at the opposite side of the outer wall 306 is an inner wall 312, these parts together providing the channel 302 with a U-shape. The outer wall 306 comprises integral gripping lips 308, and the inner wall 302 includes integral gripping lips 314. The gripping lips 308,314 serve to assist in securely locating the waist seal 30 to the waist line 19 of the door 1 by clamping against the edge of the outer panel 3.

Integrally extending from the base 304 is a sealing lip 316 which may seal against the exterior side of the window glass 11 in some circumstances. The part of the sealing lip 316 which may contact the window glass 11 is preferably flocked. The elements thus far described of the waist seal 30 are preferably integrally extruded from TPE or EPDM during an extrusion process.

The waist seal 30 additionally comprises a main sealing lip 318 which may be integrally extruded with the other elements of waist seal 30 or may be separately formed and joined thereto by any suitable means (such as a bonding agent). For example, the main sealing lip 318 may be formed by inserting the other elements of the already formed waist seal 30 into a mould and forming the main sealing lip 318 by moulding the lip 318 onto the other elements of the waist seal 30.

The distal end of the inner wall 312, in the region where the main sealing lip 318 is joined thereto, preferably terminates in an enlarged head portion 320 which is accommodated within the generally C-shaped recess 630 of channel 604. The enlarged head portion and/or the channel 604 is formed of resiliently deformable material. The enlarged head portion 320 and/or the mouth of the channel 630 is resiliently deformed as they are pushed together. When the enlarged head portion 320 passes the mouth of the recess 630 the resiliently deformed component or components resile in order to securely fit the sealing strip 30 to the channel 604.

As will be described in more detail below, the elements of the waist seal 30 which form the channel 302 do not extend to the point where the waist seal 30 meets the glass guiding strip 20 (see Figure 2). To the rear of the point where the waist strip 30 joins the C-pillar strip 50 (in the manner to be described in more detail below) only the main sealing lip 318 thereof continues to extend (within channel 604) towards the glass guiding strip 20. The glass guiding strip 20 may be moulded to the main sealing lip 318 of the waist strip 30 or attached thereto by any other means. However, the strips are not necessarily connected together.

The form of the roof strip 40 will now be described with particular reference to Figures 8 and 9 of the drawings, Figure 9 being a cross-sectional view taken along the line C-C of Figure 8. The roof strip 40 defines a glass receiving channel 402 for receiving window glass 11. Integrally extending from a base 404 of the roof strip 40 is an outer wall 406. The outer wall 406 has integrally formed at its distal end a sealing lip 408 for sealing against the exterior surface of the window glass 11. Extending from the opposite side of the base 404 is an inner wall 412, these parts defining the generally U-shaped channel 402. Extending integrally from the distal end of the inner wall 412 over the mouth of the channel 402 is a second sealing lip 414 for sealing against the interior surface of the window glass 11. An additional sealing lip 416 may also integrally extend from the inner wall 412 between the base 414 and the sealing lip 414 for improving sealing against the interior surface of the window glass 11 and therefore improving the noise insulation and reducing the ingress of moisture. Preferably, the surfaces of the lips 408,414 and 416 that contact the window glass 11 are flocked.

Extending from the distal end of the inner wall 412 initially in the opposite direction to the sealing lip 414 and then downwardly generally parallel to the inner wall 412 is a clamping lip 418. This clamping lip 418 is for extending around the inner door panel 5 as it extends along the roof line 15 in order to assist in locating the roof strip with respect to the door 1. The elements of the roof strip 40 described above are preferably integrally formed from TPE or EPDM and formed by an extrusion process.

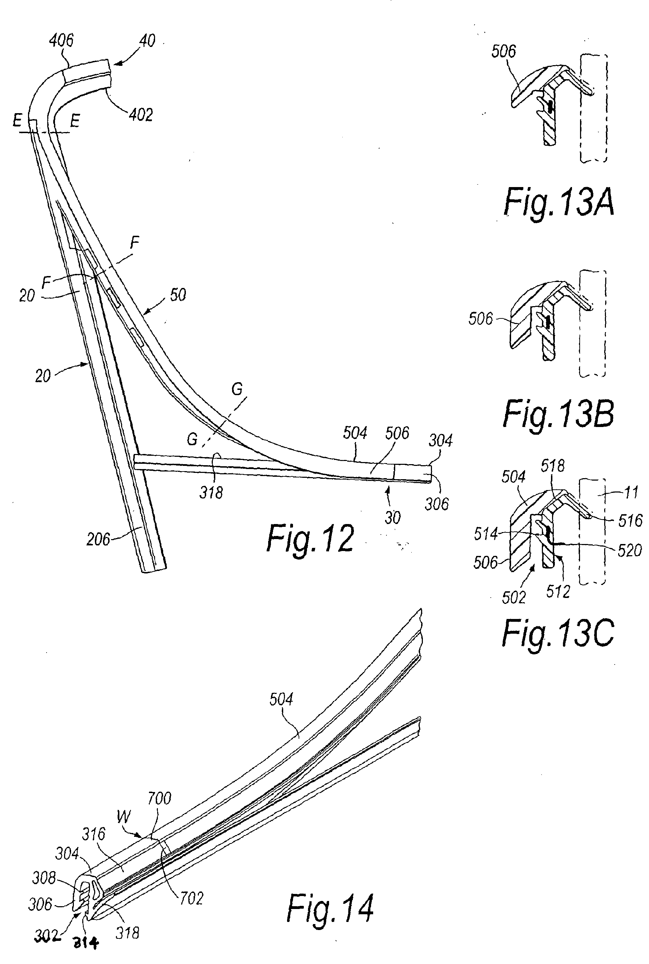

The form of the C-pillar strip 50 will now be described with particular reference to Figures 12,13A to 13C,14,15 and 16. Figures 13A to 13C are cross sections taken along the lines E-E, F-F and G-G of Figure 12. The cross-section of Figure 13C generally corresponds to the cross-section at the point at which the C-pillar strip 60 is connected to the waist strip 30 (this region being shown in Figure 14). At the region where the C-pillar strip 50 meets the waist strip 30, as shown in Figure 13C, the C-pillar strip 50 defines a generally U-shaped channel 502 for receiving the edge of the outer door panel 3 and possibly additionally the edge 608 of the wall 606 of the mounting assembly 60 (Figure 3). From the base 504 of the channel 502 an outer lip 506 extends. The base 504 and outer lip 506 are preferably formed by a moulding operation in a mould. The moulded material of the base 504 and outer lip 506 may comprise TPE or EPDM.

An outer wall 512 of the channel 502 has gripping lips 514 integrally extending therefrom. The gripping lips grip against the outer panel 3 of the door 1 (and also the edge 608 of the wall 606 if appropriate) in order to assist in securely locating the C-pillar strip 50 with respect thereto. Where the inner lip 512 meets the base 504 a sealing lip 516 integrally extends from the inner lip 512 in a direction away from the channel 502. The sealing lip is for sealing against the exterior surface of the window glass 11. Preferably, the surface of the sealing lip 516 that contacts the window glass 11 is flocked.

The inner wall 512 and sealing lip 516 are preferably integrally extruded from TPE or EPDM and are formed by an extrusion process. The extruded form comprises the inner wall 512 and the sealing lip 516 includes a generally planar joining surface 518. The moulded form comprising the outer wall 506 and the base 504 includes a corresponding generally planar joining surface where the base 504 terminates. The respective joining surfaces are coupled together by any suitable means. For example, the joining surfaces may be coupled together using a bonding agent. However, the extruded form comprising the inner wall 512 and the sealing lip 516 may initially be formed, whereafter the extruded form is placed in a mould which forms the moulded form comprising the base 504 and the outer wall 506 simultaneously with mouling this form onto the extruded form.

The inner wall 512 may advantageously be formed with an elongate, rectangular cross-section carrier 520 embedded therein during the extrusion thereof. The carrier may be formed of any suitable material which is more rigid than the material of the inner wall 512
- for example, metal or hard rubber. The carrier assists in handling the extruded form.

For example, as the extruded form exits the extruded die the presence of the carrier 520 will reduce the tendency of the extruded material to sag.

At the point W (Figure 14) where the C-pillar strip 50 meets the waist strip 30, the base 304 of the waist strip 30 is joined to the base 504 of the C-pillar strip 50. The inner wall 306 of the waist strip 30 is joined to the inner wall 506 of the C-pillar strip 50. The outer leg 312 of the waist seal 30 is joined to the outer leg 512 of the C-pillar strip 50. Also, the sealing lip 316 of the waist seal 30 is joined to the sealing lip 516 of the C-pillar strip 50. Preferably, these components of the waist strip 30 and the C-pillar strip 50 are connected simultaneously. The components may be connected by a bonding agent or may be moulded together. The moulded form comprising the base 504 and the outer wall 506 of the C-pillar strip 50 may be formed as part of this moulding operation 40. The join between the base 304 of the waist strip 30 and the base 504 of the C-pillar strip 50 is designated with reference numeral 700 in Figure 14. The join between the sealing lip 316 of the waist strip 30 and the sealing lip 516 of the C-pillar strip 50 is designated with the reference numeral 702 in Figure 14.

If the main sealing lip 318 is integrally extruded with the other parts of the waist seal 30, then the outer wall 306, base 304, inner wall 312 and sealing lip 316 will be cut away and removed at the point W, leaving only the main sealing lip 318 remaining to the rear of this point. The main sealing lip 318, as described above, extends linearly rearwardly along the waist line 19 of the door 1 along the channel 604 of the mounting assembly 60 until it meets the glass guiding strip 20 mounted in the channel 602 of the mounting assembly 60. The main sealing lip 318 will therefore seal against the exterior surface of the window glass 11 along the entire length thereof, even the length that is hidden by the outer door panel 3 forming the C-pillar 17.

To the rear of point W, the C-pillar strip 50 bends away from the main sealing lip 318 and the channel 604 and curves upwardly towards the point where the C-pillar 17 meets the roof line 15. At approximately mid-way along the C-pillar strip 50 the strip 50 has the cross-sectional form as shown in Figure 13B (taken along the line F-F of Figure 12). The form at this point is similar to the form shown in Figure 13C, however, the outer wall 506 is of shorter length.

Towards the point where the C-pillar strip 50 meets the roof line 15 of the door 1 the strip has the cross-sectional form shown in Figure 13A (taken along the line E-E of Figure 12). Here the outer wall 506 is shortened further.

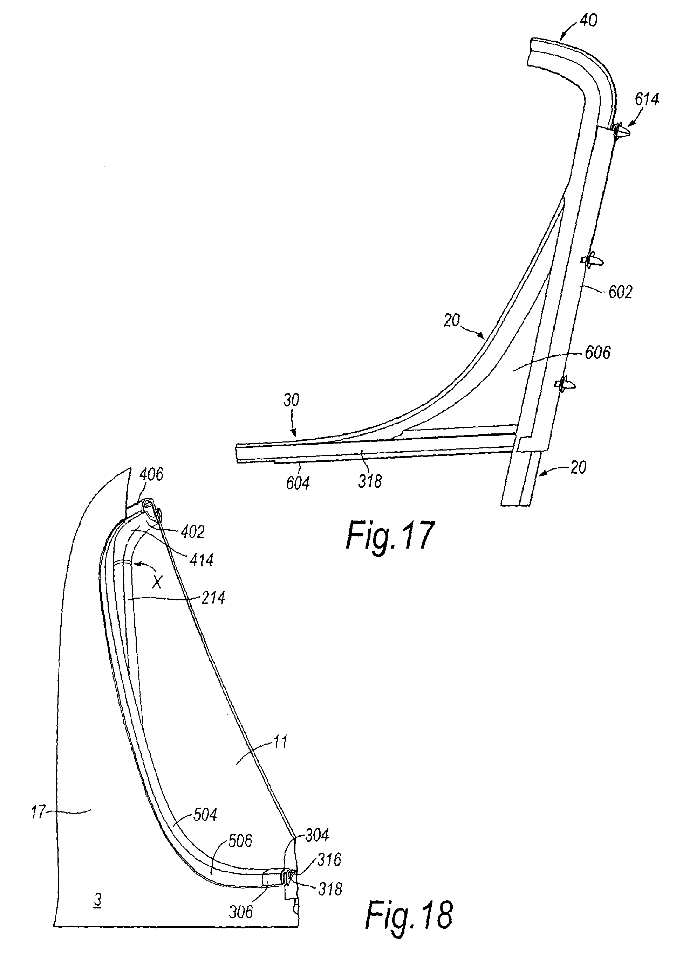

The progressive shortening of the outer wall 506 from the waist line 19 to the roof line 15 of the door 1 results in the height of the C-pillar strip 30 visible from the exterior vehicle progressively reducing as it extends from the waist line 19 to the roof line 15, as shown in Figure 1 and particularly in Figure 18. This may provide a pleasing and distinctive visual appearance.

The glass guiding strip 20, the roof strip 40 and the C-pillar strip 50 meet at the region where the C-pillar 17 meets the roof line 15 of the door 1. The arrangement of the various strips at this region will now be described with particular reference to Figures 8,15 and 16 of the drawings.

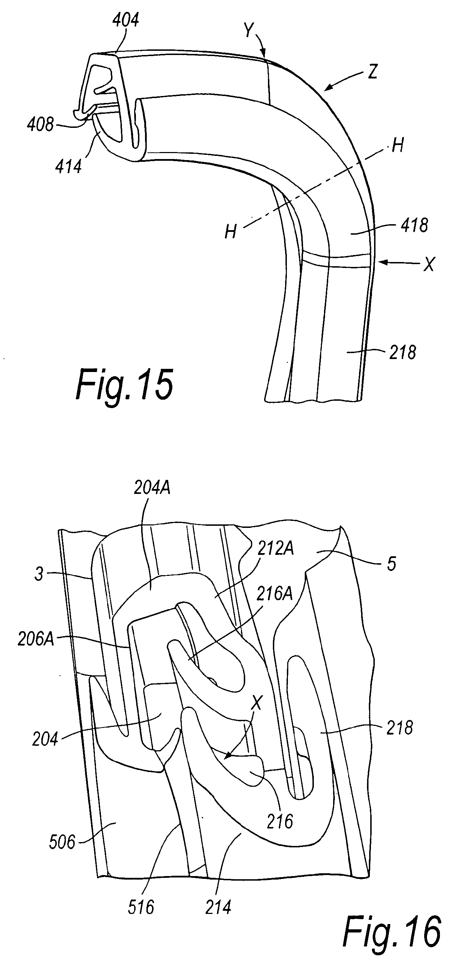

The gripping lip 218 of the glass guiding strip 20 is connected to the gripping lip 418 of the roof strip 40 at point X (Figure 15) by a bonding agent or by moulding those lips together. The sealing lip 214 of the glass guiding strip 20 and the corresponding sealing lip 414 of the roof strip 40 are also joined together at point X. Between points X and Y the moulded form of the C-pillar strip 50 has additionally formed (that is in addition to the remains of the outer wall 506 and the base 504) a moulded part having the form corresponding to the lip 208 of the glass guiding strip 20 at the outer wall 208 of the glass run 20, the base 204 of the glass guiding strip 20 and the majority of the inner wall 212 of the glass guiding strip 20, including the additional sealing lip 216. These additional moulded parts of the C-pillar strip 50 have a form corresponding to the equivalent parts of the glass run strip 20 and are moulded onto those parts or otherwise bonded thereto. As the sealing assembly extends around the sharp corner Z the configuration of these moulded parts gradually changes so that the base of the moulded part corresponds in form to the base 404 of the roof strip 40, and additionally like-named parts of the moulded part gradually correspond to the outer wall 406, sealing lip 408, sealing lip 416 and the majority of the inner wall 412 of the roof strip 40.

In Figure 16 the moulded parts of the C-pillar guiding strip 50 corresponding to parts of the glass guiding strip 20 are designated with the same reference numerals but suffixed by the letter A.

The sealing lip 208 of the glass guiding strip 20, the sealing lip 516 of the C-pillar strip 50 and the sealing lip 408 of the roof strip 40 are joined together near the point X. Also near the point X the base 504 and the remainder of the outer wall 506 have a form as shown in Figure 13A. The thickness of these moulded parts gradually reduces between the point X and the point Y (as shown particularly in Figure 8) such that at the point Y the thickness of these parts has reduced to nothing and the moulded material present corresponds to the form of the base 404, outer wall 406 and sealing lip 408, sealing lip 416 and the majority of the inner wall 412 of the roof strip 40 to provide a smooth exterior surface at the point where the moulded parts join the parts 404,406,408, 412 and 416 of the extruded roof strip 40 - as shown in Figure 8.

The sealing assembly described provides a C-pillar strip 50 which extends between the roof line 15 and the waist line 19 of the door 1, providing a continuous, moulded surface visible from the exterior of the vehicle and having a constantly shaped sealing lip 516 extending along the strip. Such an arrangement provides a pleasing visual appearance.
It should be understood that, instead of the sealing lip 516 having the form shown, sealing lip 516 could be provided by providing an additional wall extending between the distal end of the sealing lip 516 and the wall 512, thereby defining a chamber.

Despite the sealing assembly being formed from a separate glass guiding strip 20, waist strip 30, roof strip 40 and C-pillar strip 50, a generally continuous visible surface can be seen from the exterior of the vehicle corresponding to the moulded form comprising the base 504 and the outer wall 506 of the C-pillar strip 50. The surfaces that contact the window glass 11 are formed by extrusion during which flocking may be applied. No moulded parts require flocking. As is known to those skilled in the art, in order to provide a flocked surface to a moulded part a post-flocking operation must be performed (that is, a separate flocking operation must be performed after the formation of the moulded parts). This adds an additional step to the manufacturing process and therefore increases the cost.

Figure 17 shows the view of the interior side of the mounting assembly 60 to which the glass guiding strip 20, waist strip 30, roof strip 40 and C-pillar strip 50 have been mounted.

Figure 18 shows a cut away perspective view of the rear door 1 of Figure 1 from a different viewpoint in which the sealing lips 214 and 414 of the glass run strip 20 and roof strip 40 are visible through the window glass 11 to aid understanding, although it will be appreciated that such a view will not often be seen from the exterior of the vehicle and will be partially obscured by the window glass (especially if the window glass has a tint).

Although the sealing arrangement described has been in respect of a C-pillar, it should be understood that such an arrangement could be applied to any other curved opening, for example, at the B-pillar or A-pillar.

## Claims

1. A sealing arrangement for sealing and guiding a closure member (11) for closing an aperture (9), the sealing arrangement including a first section (30) for sealing against a surface of the closure member (11) as the closure member (11) moves relative thereto and a second section (20,40) having a channel (202,402) for receiving an edge of the closure member (11), **characterised in that** a lip (316,516,408) extends along the first section (30) and the second section (20,40).

2. The arrangement of claim 1, wherein the lip (316, 516, 408) is for sealing against the closure member (11) at at least one of the sections (30,20,40).

3. The arrangement of claim 1 or claim 2, wherein the lip (316,516,408) has a flocked surface for contacting the closure member (11) at at least one of the sections (30,20,40).

4. The arrangement of claim 1, 2 or 3, wherein the closure member (11) comprises a slidable window pane.

5. The sealing arrangement of any one of claims 1 to 4, wherein the aperture (9) is a window opening in a vehicle door.

6. The arrangement of claim 5, wherein the first section (30) comprises a waist seal (30).

7. The arrangement of claim 5, wherein the second section (20,40) comprises a glass run section.

8. The arrangement of claim 7, wherein the second section (20,40) comprises a roof seal.

9. The arrangement of claim 7, wherein the second section (20,40) extends along at least one of the A-pillar, B-pillar and C-pillar of a vehicle.

10. The arrangement of any one of claims 1 to 9, wherein the first section (30) and the lip (316) thereof, and the second section (20,40) and the lip thereof (408), are formed separately and are joined together.

11. The arrangement of claim 10, wherein the first (30) and second sections (20,40) are joined by a moulding operation.

12. The arrangement of any one of claims 1 to 11, wherein at least one of the first (30) and second sections (20,40), and the lip (316,516,408), are formed by extrusion.

13. The arrangement of any one of claims 1 to 12, wherein the lip (408) of the second section (20,40) extends partially across the mouth of the channel (202,402).

14. The arrangement of any one of claims 1 to 13, wherein the first section (30) includes a mounting channel (604) for mounting that section with respect to the aperture (9).

15. The arrangement of any one of claims 1 to 14, wherein the second section (20,40) includes a mounting channel (602) for mounting that section with respect to the aperture (9).

16. The arrangement of claim 15, wherein the mounting channel (602) of the second section (20,40) extends generally in the opposite direction to the closure member (11) receiving channel (202,402) of the second section (20,40).

17. A method of forming a sealing arrangement for sealing and guiding a closure member (11) for closing an aperture (9), the method including forming a first section (30) for sealing against a surface of the closure member (11) as the closure member moves relative thereto, and forming a second section (20,40) having a channel for receiving an edge of the closure member (11), wherein the first (30) and second (20,40) sections are formed with a lip (316,516,408) which extends along the first (30) section and the second section (20,40).

18. The method of claim 17, including the steps of forming a sealing arrangement according to any one of claims 1 to 16.

19. A sealing arrangement for sealing and guiding a closure member (11) for closing an aperture (9), the sealing arrangement including a first section (30) for sealing against a surface of the closure member (11) as the closure member (11) moves relative thereto, a second section (20,40) having a channel (202,402) for receiving an edge of the closure member (11), and **characterised by** a moulded part (50) extending between the first section (30) and the second section (20,40) for connecting them, the arrangement being such that, when the sealing arrangement is in use, the moulded part (50) is visually prominent.

20. The arrangement of claim 19, wherein the first section (30) and the second section (20,40) meet at a corner, and wherein the moulded part (50) forms a curved surface bridging across that corner.

21. The assembly of claim 20, wherein the corner is a sharp corner.

22. The assembly of claim 19,20 or 21, wherein, when the sealing arrangement is in use, at least part of the length of the first section (30) or second section (20,40) is not visible.

23. The arrangement of any one of claims 19 to 22, wherein a lip (316,516,408) extends along the first section (30) and the second section (30,40).

24. The assembly of claim 23, wherein the lip (316,516,408) also extends along the moulded part (50).

25. The assembly of claim 24, wherein the moulded part (50) comprises an extruded part joined thereto and extending along its length.

26. The assembly of claim 25, wherein the lip (316,516,408) of the moulded part (50) is formed in the extruded part of the moulded part (50).

27. The assembly of claim 25 or 26, wherein the extruded part of the moulded part (50) includes a relatively rigid elongate member (520) embedded therein and extending along the length thereof.

28. The assembly of any one of claims 19 to 27, including a relatively rigid mounting structure (60) for supporting the first section (30), the second section (20,40) and the moulded part (50).

29. The assembly of claim 28, wherein the first section (30), second section (20,40) and moulded part (50) are mounted to the support mounting structure (60) prior to coupling the mounting structure (60) to the frame defining the aperture (9).

30. The assembly of claim 28 or 29, wherein the mounting structure (60) comprises a first channel (604) for receiving a portion of the first section (30) and a second channel (602) for receiving a portion of the second section (20,40).

31. The arrangement of claim 28,29 or 30, wherein the mounting structure (60) includes a member extending between the channels (604,602) onto which the moulded part (50) is mounted.

32. The arrangement of any one of claims 19 to 31, wherein the closure member (11) comprises a window pane.

33. The arrangement of any one of claims 19 to 32, wherein the aperture (9) is a window opening in a vehicle door.

34. The arrangement of claim 33, wherein the first section (30) comprises a waist seal.

35. The arrangement of claim 33 or 34, wherein the second section (20,40) comprises a glass run section.

36. The arrangement of claim 33 or 34, wherein the second section (20,40) comprises a roof seal.

37. The arrangement of claim 34 or 35, wherein the second section (20,40) comprises at least one of an A-pillar, B-pillar and C-pillar seal.

38. The arrangement of any one of claims 19 to 37, wherein the first (30) and second (20,40) sections are formed separately and are joined together.

39. The arrangement of claim 38, wherein the first section (30) and the second section (20,40) are joined together by a moulding operation.

40. The arrangement of claim 39, wherein said moulding operation also forms the moulded part (50).

41. A method of forming a sealing arrangement for sealing and guiding a closure member (11) for closing an aperture (9), the method including forming a first section (30) for sealing against a surface of the closure member (11) as the closure member (11) moves relative thereto in use, forming a second section (20,40) having a channel (202,402) for receiving an edge of the closure member (11), and forming a moulded part (50) extending between the first section (30) and the second section (20,40) for connecting them, the arrangement being such that, when the sealing arrangement is mounted to a frame, the moulded part (50) is visually prominent.

42. The method of claim 41, including the steps of forming a sealing arrangement according to any one of claims 19 to 40.
